Europäisches Patentamt

European Patent Office

Office européen des brevets

(11) Publication number: **0 061 305**
**B1**

# EUROPEAN PATENT SPECIFICATION

(45) Date of publication of patent specification: **05.12.84**

(51) Int. Cl.³: **A 23 L 3/18,** A 23 L 1/22

(21) Application number: **82301391.7**

(22) Date of filing: **18.03.82**

(54) **Method for preparing spices.**

(30) Priority: **19.03.81 JP 38720/81**
**19.03.81 JP 38721/81**

(43) Date of publication of application:
**29.09.82 Bulletin 82/39**

(45) Publication of the grant of the patent:
**05.12.84 Bulletin 84/49**

(84) Designated Contracting States:
**CH DE FR GB IT LI**

(56) References cited:
**DE-A-2 618 182**

**Patent Abstracts of Japan Vol. 5, No. 79, 23 May 1981**

(73) Proprietor: **KIKKOMAN CORPORATION**
**339 Noda**
**Noda-shi Chiba (JP)**

(72) Inventor: **Tsukada, Naoshi**
**65-1 Yanagisawa**
**Noda-shi (JP)**
Inventor: **Arai, Takashi**
**1698-2, Nishikananoi Showamachi**
**Kitakatsushika-gun Saitama-ken (JP)**
Inventor: **Akao, Takeshi**
**177-1, Wakamatsu**
**Abiko-shi (JP)**

(74) Representative: **Hale, Stephen Geoffrey et al**
**J.Y. & G.W. Johnson Furnival House 14/18 High Holborn**
**London WC1V 6DE (GB)**

# 0 061 305

**Description**

This invention relates to a method for preparing spices and, more particularly, to a method for preparing sterilized spices.

Most of the spices and crude drugs available in Japan are imported and are treated with fumigating gases for the purpose of disinfestation. The gas fumigation aims mainly at killing insects and is not adequate for the complete inactivation of contaminant microorganisms in the product. For this reason, it is a general practice to use a sterilizing gas or vapor such as ethylene oxide or propylene oxide; recently sterilization of microorganisms by an ionizing radiation is under investigation. These methods, however, present various problems in terms of the handling of sterilizing gases or the residue of radioactivity after the process, equipments, and working environment.

JP—A—56 26 180 relates to thermal sterilization of powder or granules of food, feed, or drug by letting the powder or granules float or flow in a pipe with low-pressure superheated steam, and sterilizing them uniformly in a short time by heating.

In sterilizing raw materials for food contaminated by microorganisms, it is a general practice to apply heat. However, if the heat sterilization of conventional processing is applied to the spices, the aroma and taste, which are the soul of spices, or other active constituents tend to be lost or degraded, resulting in an adverse effect in commercial value of the product. It is the actual situation that the gas sterilization still prevails and the radiation sterilization is under way in spite of such practical problems as described above.

Under the circumstances, the present inventors conducted studies on the method for sterilizing the spices and, as a result, found that by heating these materials while being suspended in a stream of superheated steam, it is possible to effective sterilization in a very short period of time without causing loss or degradation in aroma and taste due to the short heating time, though the process is a kind of heat sterilization.

Most of the spices are made of seeds, fruits, leaves, roots and barks of plants as raw materials and the contamination by microorganisms is found mostly on the surface of these raw materials. It was found that by heating the raw materials in the original form or after having been coarsely crushed to 2 to 30 meshes (11—0.59 mm), thereby avoiding fine pulverization, it is possible to enhance the above effects, causing neither loss in moisture content nor formation of adhered layer on the wall of pipeline; an additional advantage is the higher efficiency in the separation of sterilized products. It was thus possible to establish a method for preparing sterilized spices and the like, which is excellent also from the industrial viewpoint.

According to the present invention there is provided a method for preparing a spice, characterised in that a raw material corresponding to a spice is heat-sterilized, either in its original form or coarsely crushed to 2 to 30 mesh, whilst it is suspended in and carried by a stream of superheated steam flowing through a pipeline (2), and the sterilized material is pulverized (5) below 30 mesh (0.59 mm).

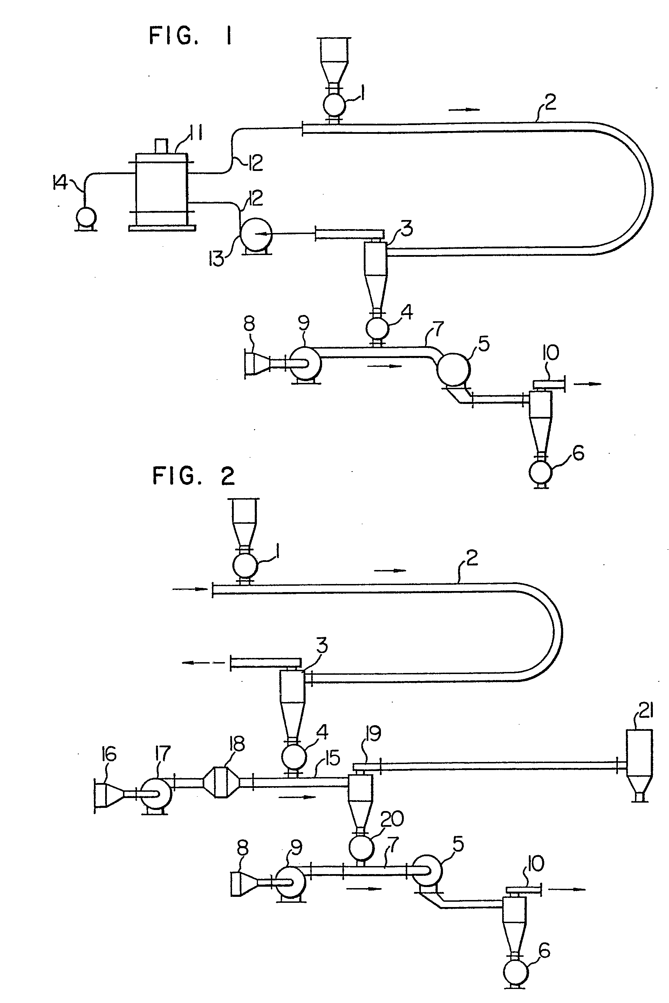

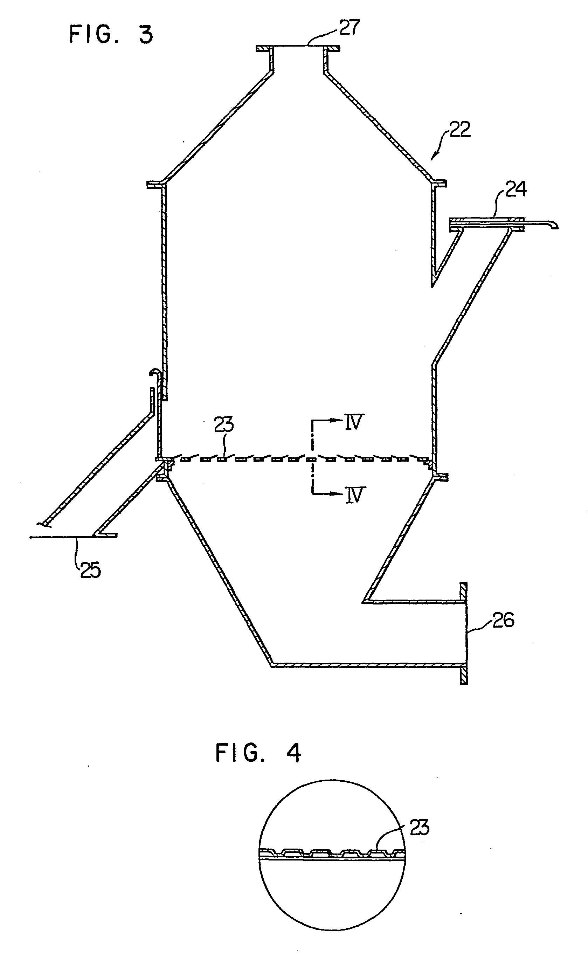

In the accompanying drawings, Figs. 1 and 2 are to illustrate embodiments of this invention; Fig. 3 is a schematic drawing to illustrate a sterilizer of the fluidized bed type; Fig. 4 is the cross-sectional view at the plane IV—IV of Fig. 3. Each number in the figures denotes the following devices:

| | |
|---|---|
| 1 | Feeding device |
| 2 | Heating pipeline |
| 3, 10, 19 | Separators |
| 4, 6, 20 | Discharge device |
| 5 | Disintegrator |
| 7, 15 | Transfer pipings |
| 8, 16 | Microbial filters |
| 9, 17 | Blowers |
| 11 | Superheater |
| 12 | Recycle pipeline |
| 13 | Recycling blower |
| 14 | Steam pipe |

2

| 18 | Heater |
| 21 | Shower chamber |
| 22 | Fluidized bed chamber |
| 23 | Distribution plate |
| 24 | Raw material inlet |
| 25 | Product outlet |
| 26 | Superheated steam inlet |
| 27 | Superheated steam outlet |

Heat sterilization becomes more effective with the increase in surface area of the substance to be treated exposed to the heating medium. It is preferable, in this sense, that the substance to be treated has been pulverized, but, on the other hand, the loss or degradation in active constituents of the spices and similar materials during heating becomes larger in proportion to the degree of pulverization. In other words, with respect to the particle size the effectiveness of heat sterilization and the prevention of loss or degradation of active constituents are contradictory requirements for the successful heat sterilization of spices. One of the features of this invention consists in answering the contradictory requirements by a simple means of heating the spices for a very short period of time while being suspended in and carried by a stream of superheated steam and without being too finely pulverised beforehand.

Heat sterilization is generally carried out in one of two ways, namely by applying either dry heat or moist heat. When it is desired to obtain the sterilized product in dry form, dry heat sterilization employing hot air or superheated steam is preferred. As compared with hot air, the use of superheated steam has according to the present invention the advantages of larger heat capacity, larger sterilization efficiency, and less oxidation of the material being treated. Heat sterilization employing superheated steam in a fluidized bed or a through-circulation sterilizer is known. The fluidizing sterilizer and the through-circulation sterilizer, however, have disadvantages of prolonged sterilization time and nonuniform heating of the material, because the flow in these types of sterilizers is not of a piston type. To the contrary, in the method of this invention in which the material is heated as suspended in a stream of superheated steam, the material fed to the stream at a velocity of practically zero acquires velocity as it is conveyed in suspension in the stream until a velocity approximating that of the superheated steam (e.g. 15 m/second) is reached. The large velocity difference between the material immediately after it has been fed and the contacting superheated steam results in an increased heat transfer coefficient in the boundary film as compared with the fluidized type, and, as a consequence, permits rapid heat sterilization. Moreover, uniform heat sterilization is obtained in the present method, because the material is conveyed by the stream of superheated steam through the pipeline in the form of a dispersion of individual particles and the flow is of the piston type.

The invention is described below in more details with reference to Fig. 1 of the drawings.

The spice raw materials treated according to this invention include pepper, cayenne pepper, mustard, ginger, cinnamon, cassia, laurel, allspice, clove, mace, nutmeg, turmeric, paprika, fennel, coriander, caraway, cumin, dill, cardamon, marjoram, sage, thyme, Japanese pepper, horseradish, peppermint, beefsteak plant leaf, onion, and garlic.

The raw materials, in their original form or coarsely crushed to 2 to 30 mesh (11—0.59 mm), are fed to heating pipeline 2 through feeding device 1. The steam from a steam generator (not shown) is introduced through steam pipe 14 to superheater 11 where it turns into superheated steam to be sent to heating pipeline 2. The raw material fed to heating pipeline 2 becomes suspended in the stream of superheated steam and heat sterilized while being conveyed toward the exit. The suspended sterilized material is separated in separator 3 from the superheated steam and discharged through discharge device 4. The superheated steam separated in separator 3 is recycled through recycle pipeline 12, which is connected to recycling blower 13, to superheater 11 where it is reheated.

The pressure of the superheated steam being used in the present method usually is 3 kg/cm$^2$ (guage) (2.94 bar) or less, preferably 2 kg/cm$^2$ (guage) (1.96 bar) or less, and the temperature is usually 120° to 250°C, preferably 120° to 200°C, at the entrance to heating pipeline 2. The velocity of the superheated steam fed to heating pipeline 2 varies depending on the appearent density, shape and quantity of the raw material to be fed, but is generally about 10 to 30 m/second, preferably 15 to 25 m/second, and the time of heating the raw material is 2 to 30 seconds, preferably 2 to 15 seconds. The heating pipeline 2 should be thermally-insulated to avoid the condensation of the superheated steam. Although the heating pipeline 2 shown in Fig. 1 is in an U shape, it can, of course, be in a straight line.

The material discharged from the discharge device 4 after having been heat sterilized while being

3

suspended in and conveyed by the superheated steam flowing through the heating pipeline 2 is pneumatically conveyed by means of blower 9, which is provided with a microbial filter 8, to disintegrator 5 to be pulverized therein to below 30 mesh (0.59 mm). The disintegrator 5 is preferably of the high-speed rotary type such as a hammer mill or pin mill, though other types may be used. The crushed material is separated in separator 10 and discharged from discharge device 6. The crushed spices thus obtained show a very small or substantially zero viable count and is also of excellent quality.

In the above embodiment the material is in microbes-free environment pulverized immediately after sterilization. It is, of course, not necessary to stick to the above procedure. For instance, the sterilized material can be temporarily stored in a hopper or the like and then pulverized. In view of the prevention of secondary contamination, it is needless to say that a more desirable product is obtained by pulverizing under aseptic conditions immediately after the sterilization.

Fig. 2 represents another embodiment in which the condensation of superheated steam in disintegrator 5 is completely prevented. This particular mode of operation is suitable for the spices which easily become sticky in the presence of moisture. The material discharged from discharge device 4 is carried by the sterile hot air supplied by blower 17, which is provided with microbial filter 16 on the suction side and heater 18 on the delivery side, and introduced through transfer pipeline 15 to separator 19 when the material is completely separated from the superheated steam without condensation of the latter. The material separated from the superheated steam is further carried by the sterile air from blower 9 provided with microbial filter 8 and introduced through transfer pipeline 7 to disintegrator 5. The pulverized sterile material is collected in separator 10 and discharged from product discharge device 6.

As described above in detail, according to this invention, the spices contaminated with microorganisms may be sterilized with minimal loss or degradation of active constituents by a simple procedure of heat-sterilizing the raw materials in original form or after coarse crushing to 2 to 30 mesh (11—0.59 mm), while being suspended in a stream of superheated steam flowing through a pipeline, and then pulverizing the sterilized material below 30 mesh (0.59 mm). As compared with the conventional gas sterilization or ionized radiation sterilization, the present method is much simpler to operate in a practical working environment.

The invention is illustrated below with reference to Examples, but the invention is not limited thereto.

Example 1

A quantity of 1,000 kg of white pepper in original form (4—8 mesh) (4.76—2.38 mm) was heat-sterilized at a feeding rate of 200 kg/hour and immediately pulverized in the following manner.

Through a pipeline, 2.5 inches (6.35 cm) in diameter and 15 m long, was allowed superheated steam to flow at a velocity of 15 m/second at a pressure of 1 kg/cm$^2$ guage (0.98 bar) and a temperature of 180°C (as measured at the region where the raw material was fed). The raw material was sterilized for 5 seconds while the material being suspended in and carried by the stream of superheated steam, and immediately thereafter was pulverized aseptically in a high-speed impact mill provided with 0.6 mm screen to obtain powdered white pepper, 90% by weight of which had a particle size of 30 to 100 mesh (0.59—0.15 mm) (sample No. 1).

For comparison, another powdered white pepper was prepared by repeating the above procedure, except that the original white pepper from the same lot as used above was pulverized before sterilization so that 90% by weight of the material subjected to sterilization had a particle size of 30 to 100 mesh (0.59—0.15 mm) (sample No. 2).

For further comparison, the same white pepper raw materials (in original form and after crushing) as used in preparing samples No. 1 and No. 2 were sterilized in a fluidized sterilization apparatus (see Fig. 3) provided with a distributor of 1×5 mm perforated plate, through which superheated steam was introduced at a superficial velocity of 50 cm/second in the column under the conditions shown in Table 1. There were obtained powdered white pepper samples.

As is apparent from Table 1, the sample No. 1 obtained according to this invention showed a general viable count of zero and an intensity of aroma substantially as good as that of the untreated sample. The sample No. 2 also possessed a general viable count of zero but the yield was substantially lower than for sample No. 1 and the aroma was considered less satisfactory than for sample No. 1. The control samples No. 1 and No. 2 obtained by use of a fluidized sterilization apparatus showed a general viable count (number/g) of 3×10$^2$ or 4×10$^2$ in spite of a heating time of 60 or 120 seconds; and the intensity of aroma was low due to a loss in aromatic constituents caused by prolonged heating time.

TABLE 1

| Sample (white pepper) | Heating conditions | | | General viable count, (number/g) | Moisture (%) | Yield (%) | Sensory test* | | | | |
|---|---|---|---|---|---|---|---|---|---|---|---|
| | Press. (kg/cm²G) | Temp. (°C) | Time (sec.) | | | | Ranking | | | | |
| | | | | | | | 1 | 2 | 3 | 4 | 5 |
| Before treatment | — | — | — | $1.6 \times 10^5$ | 13.5 | 100 | 10 | 3 | 2 | 0 | 0 |
| Sample No. 1 (original) | 1 | 165 | 5 | 0 | 12.0 | 97.5 | 4 | 10 | 1 | 0 | 0 |
| Sample No. 2 (crushed) | 1 | 165 | 5 | 0 | 5.4 | 84.3 | 1 | 2 | 11 | 1 | 0 |
| Control No. 1 (original) | 1 | 165 | 120 | $4.6 \times 10^2$ | 9.6 | 92.3 | 0 | 0 | 1 | 11 | 3 |
| Control No. 2 (crushed) | 1 | 165 | 60 | $3.5 \times 10^2$ | 6.2 | 84.2 | 0 | 0 | 0 | 3 | 12 |

Note:—
*Sensory test: 1 g of each sample was diluted with 100 ml of water and the intensity of aroma was evaluated by a panel of 15 members using the method of ranking. The figure given in the table is the number of members.

Example 2

By using the apparatus shown in Fig. 2, 1,000 kg of ginger coarsely crushed to 10 to 20 mesh (2.0—0.84 mm) was sterilized at a feeding rate of 200 kg/hour in the following manner and immediately thereafter was pulverized.

Through a pipeline, 2.5 inches (6.35 cm) in diameter and 15 m long, was allowed superheated steam to flow at a velocity of 15 m/second at a pressure of 2 kg/cm² guage (1.96 bar) and a temperature of 190°C, as measured at the region where the raw material was fed. The raw material was sterilized for 5 seconds while being suspended in and carried by the stream of superheated steam, and immediately thereafter was pulverized in a high-speed impact mill provided with 0.5 mm screen to obtain a ginger powder, 90% by weight of which had a particle size of 30 to 100 mesh (0.59—0.15 mm) (sample No. 1).

For comparison, another ginger powder was prepared by repeating the above procedure, except that the original ginger from the same lot as used above was pulverized before sterilization so that 90% by weight of the material subjected to the sterilization had a particle size of 30 to 100 mesh (0.59—0.15 mm) (sample No. 2).

For further comparison, the same raw materials (the one coarsely crushed to 10 to 20 mesh (2.0—0.84 mm) and the other pulverized to 30 to 100 mesh (0.59—0.15 mm)) as used in preparing samples No. 1 and No. 2 were sterilized in the same fluidized sterilization apparatus as used in Example 1. The test results were as shown in Table 2.

TABLE 2

| Sample (ginger) | Heating conditions | | | General viable count (number/g) | Moisture (%) | Yield (%) | Sensory test | | | | |
|---|---|---|---|---|---|---|---|---|---|---|---|
| | Press. (kg/cm²G) | Temp. (°C) | Time (sec.) | | | | Ranking | | | | |
| | | | | | | | 1 | 2 | 3 | 4 | 5 |
| Before treatment | — | — | — | $1.5 \times 10^7$ | 14.6 | 100 | 9 | 6 | 0 | 0 | 0 |
| Sample No. 1 (coarsely crushed) | 2 | 170 | 5 | 0 | 13.4 | 97.2 | 4 | 6 | 5 | 0 | 0 |
| Sample No. 2 (pulverized) | 2 | 170 | 5 | 0 | 6.3 | 88.5 | 2 | 3 | 10 | 0 | 0 |
| Control No. 1 (coarsely crushed) | 2 | 170 | 120 | $5.4 \times 10^3$ | 11.3 | 96.5 | 0 | 0 | 0 | 12 | 3 |
| Control No. 2 (pulverized) | 2 | 170 | 60 | $3.2 \times 10^2$ | 7.5 | 85.7 | 0 | 0 | 0 | 3 | 12 |

Example 3

Various spices were prepared by repeating the procedure described in Example 1, except that various spice raw materials and various heating conditions were used as shown in Table 3. The test results were as shown also in Table 3.

8

TABLE 3

| Sample | Before treatment | | Heating conditions | | | After treatment | |
|---|---|---|---|---|---|---|---|
| | General viable count (number/g) | Moisture (%) | Press. (kg/cm²G) | Temp. (°C) | Time (sec.) | General viable count (number/g) | Moisture (%) |
| Black pepper (original form) | $1.6 \times 10^5$ | 13.5 | 2 | 135 | 5 | $2.6 \times 10^2$ | 12.9 |
| Allspice (original form) | $7.2 \times 10^5$ | 10.4 | 2 | 150 | 5 | $1.8 \times 10^2$ | 9.8 |
| Coriander (coarsely crushed) | $1.2 \times 10^5$ | 9.3 | 2 | 160 | 5 | 0 | 6.7 |
| Sage (coarsely crushed) | $6.4 \times 10^4$ | 13.7 | 2 | 165 | 5 | 0 | 7.2 |
| Nutmeg (coarsely crushed) | $1.6 \times 10^3$ | 10.2 | 2 | 160 | 5 | 0 | 9.7 |
| Black pepper (coarsely crushed) | $1.6 \times 10^4$ | 12.3 | 1 | 140 | 5 | $8.8 \times 10^2$ | 8.8 |

# 0 061 305

## Claims

1. A method for preparing a spice by thermal sterilization, characterised in that a raw material corresponding to a spice is heat-sterilized, either in its original form or coarsely crushed to 2 to 30 mesh (11—0.59 mm), whilst it is suspended in and carried by a stream of superheated steam flowing through a pipeline (2), and the sterilized material is pulverized (5) below 30 mesh (0.59 mm).

2. A method according to claim 1, characterised in that the superheated steam is at a pressure of 2.94 bar (3 kg/cm² gauge) or less.

3. A method according to claim 2, characterised in that the superheated steam is at a pressure of 1.96 bar (2 kg/cm² gauge) or less.

4. A method according to any of claims 1 to 3, characterised in that the flow rate of the superheated steam is from 10 to 30 m/second.

5. A method according to any of claims 1 to 4, characterised in that the heat sterilization is carried out for from 2 to 30 seconds.

6. A method according to any of claims 1 to 5, characterised in that the spice is at least one material selected from pepper, cayenne pepper, mustard, ginger, cinnamon, cassia, laurel, allspice, clove, mace, nutmeg, turmeric, paprika, fennel, coriander, caraway, cumin, dill, cardamon, marjoram, sage, thyme, Japanese pepper, horseradish, peppermint, beefsteak plant leaf, onion and garlic.

7. A method according to any of claims 1 to 6, characterised in that the superheated steam is at a temperature of from 120°C to 250°C.

8. A method according to claim 7, characterised in that the superheated steam is at a temperature of from 120°C to 200°C.

9. A method according to any of claims 1 to 8, characterised in that the sterilized material is pulverised so that at least 90% has a particle size of 30 to 100 mesh (0.59—0.15 mm).

## Revendications

1. Un procédé de préparation d'une épice par stérilisation thermique, caractérisé en ce qu'un matériau brut correspondant à une épice est stérilisé à chaud, soit sous sa forme originelle ou écrasée grossièrement de 2 à 30 mesh (11—0,59 mm), tandis qu'il est mis en suspension et porté par un courant de vapeur surchauffé qui traverse un tuyau (2) et le matériau stérilisé est pulvérisé (5) à une taille inférieure à 30 mesh (0,59 mm).

2. Un procédé selon la revendication 1, caractérisé en ce que la vapeur surchauffée est à une pression de jauge de 2,94 bars (3 kg/cm²) ou moins.

3. Un procédé selon la revendication 2, caractérisé en ce que la vapeur surchauffée est à une pression de jauge de 1,96 bars (2 kg/cm²) ou moins.

4. Un procédé selon l'une quelconque des revendications 1 à 3, caractérisé en ce que le taux de flux de la vapeur surchauffée est de 10 à 30 m/seconde.

5. Un procédé selon l'une quelconque des revendications 1 à 4, caractérisé en ce que la stérilisation par chaleur est effectuée de 2 à 30 secondes.

6. Un procédé selon l'une quelconque des revendications 1 à 5, caractérisé en ce que l'épice est au moins l'un des matériaux choisis parmi le poivre, le poivre de Cayenne, la moutarde, le gingembre, la cannelle, la casse, le laurier, le piment, le clou de girofle, le macis, la noix de muscade, le curcuma, le paprika, le fenouil, le coriandre, le carvi, le cumin, l'aneth, la cardamome, la marjolaine, la sauge, le thym, le poivre japonais, le raifort, la menthe poivrée, des herbes pour parfumer la viande, l'oignon et l'ail.

7. Un procédé selon l'une quelconque des revendications 1 à 6, caractérisé en ce que la vapeur surchauffée est à une température de 120—250°C.

8. Un procédé selon la revendication 7, caractérisé en ce que la vapeur surchauffée est à une température de 120 à 200°C.

9. Un procédé selon l'une quelconque des revendications 1 à 8, caractérisé en ce que le matériau stérilisé est pulvérisé si bien qu'au moins 90% présentent une taille de particule de 30 à 100 mesh (0,59—0,15 mm).

## Patentansprüche

1. Verfahren zum Zubereiten von Gewürzen durch thermische Sterilisation, dadurch gekennzeichnet, daß man ein Rohmaterial entsprechend einem Gewürz entweder in seiner Originalform oder grob zerkleinert auf 2 bis 30 mesh (11 bis 0,59 mm) hitzesterilisiert, während es in einem Strom von überhitztem Wasserdampf suspendiert ist und durch eine Pipeline (2) getragen wird, und daß das sterilisierte Material auf weniger als 30 mesh (0,59 mm) pulverisiert wird (5).

2. Verfahren gemäß Anspruch 1, dadurch gekennzeichnet, daß der überhitzte Wasserdampf einen Druck von 2,94 bar (3 kg/cm² gauge) oder weniger hat.

3. Verfahren gemäß Anspruch 2, dadurch gekennzeichnet, daß der überhitzte Wasserdampf einen Druck von 1,96 bar (2 kg/cm² gauge) oder weniger hat.

4. Verfahren gemäß einem der Ansprüche 1 bis 3, dadurch gekennzeichnet, daß die Fließrate des überhitzten Wasserdampfes 10 bis 30 m/Sek. beträgt.

5. Verfahren gemäß einem der Ansprüche 1 bis 4, dadurch gekennzeichnet, daß die Hitzesterilisation während 2 bis 30 Sekunden durchgeführt wird.

6. Verfahren gemäß einem der Ansprüche 1 bis 5, dadurch gekennzeichnet, daß das Gewürz wenigstens ein Material ausgewählt aus Pfeffer, Cayennepfeffer, Senf, Ingwer, Zimt, Cassia, Lorbeer, Piment, Nelke, Muskatblüte, Muskatnuß, Kurkuma, Paprika, Fenchel, Koriander, Kümmel, Kreuzkümmel, Dill, Kardamon, Majoran, Salbei, Thymian, Japanischer Pfeffer, Meerettich, Pfefferminz, Beefsteak-Pflanzenblatt, Zwiebel und Knoblauch ist.

7. Verfahren gemäß einem der Ansprüche 1 bis 6, dadurch gekennzeichnet, daß der überhitzte Wasserdampf eine Temperatur von 120°C bis 250°C hat.

8. Verfahren gemäß Anspruch 7, dadurch gekennzeichnet, daß der überhitzte Wasserdampf eine Temperatur von 120°C bis 200°C hat.

9. Verfahren gemäß einem der Ansprüche 1 bis 8, dadurch gekennzeichnet, daß das sterilisierte Material so pulverisiert wird, daß wenigstens 90% eine Teilchengröße von 30 bis 100 mesh (0,59 bis 0,15 mm) haben.

FIG. 1

FIG. 2

FIG. 3

FIG. 4